# EUROPEAN PATENT APPLICATION

(11) **EP 4 597 383 A1**
(43) Date of publication of application: **06.08.2025**
(21) Application number: 24223740.2
(22) Date of filing: 30.12.2024
(51) Int. Cl.: G06Q 10/0631, G06Q 10/10, G06Q 20/10, G06Q 20/32

(54) **EXTENDED FEATURES AND FUNCTIONS FOR MOBILE APPLICATIONS AND THEIR USER INTERFACES**

(30) Priority: 31.01.2024 US 202418429233
(71) Applicant: NCR Voyix Corporation, Atlanta, GA 30308-1007 (US)
(72) Inventor: FEKRI, Kamran Khashayar, Guelph, Ontario (CA); GOHIL, Mayank Bipinchandra, Kitchener, Ontario (CA); HAGEN, Connor Jeffrey, Kitchener, Ontario (CA); JOUDREY, Nicholas Francis, Kitchener, Ontario (CA); JU, Benjamin Yan, Richmond Hill, Ontario (CA)
(74) Representative: Secerna LLP

(57) **Abstract**

An existing enterprise service accessed via an enterprise mobile application is enhanced to extend features and functions of the enterprise service through the user interface of the enterprise mobile application. A user interacts with the user interface to define custom workflows with conditions and actions that are automatically performed responsive to the conditions being satisfied. The custom workflows thereby extend features and functions of the enterprise service because such workflows and conditionally triggered actions were unsupported by the existing enterprise service. The workflows can also integrate third-party services that are not integrated with the existing enterprise service.

## Description

### Background

Many retail banking applications have limited automation capabilities. For example, users often have to perform manual interventions for common repetitive tasks, like bank transfers and bill payments. Manual and repetitive tasks are not user-friendly, result in greater friction and customer dissatisfaction, can cause cascading issues for the customers when the customers forget to perform a given task, and weaken customers' loyalties to their banks.

### Summary

According to a first aspect of the present invention there is provided a method, comprising:
identifying a request to create a custom workflow automation responsive to a user selection within a user interface of an enterprise application;
presenting one or more interface screens within the user interface;
receiving, via the one or more user interface screens, user input indicative of a condition and a corresponding target action to be performed responsive to satisfaction of the condition;
creating a custom automated workflow based on the condition and the corresponding target action; and
processing the custom automated workflow as an extension of functionality of the enterprise application.

Aptly, the method, wherein presenting further includes obtaining control of a user session with the enterprise application and remotely providing the one or more interface screens for presentation within the user interface.

Aptly, the method, wherein presenting further includes initiating a container object from the user interface and presenting the interface screens within the container object.

Aptly, the method, wherein receiving further includes identifying the condition as one or more of a geolocation-based condition, an account-based condition, a transaction-based condition, a date-based condition, and a time-based condition.

Aptly, the method, wherein receiving further includes providing input fields and selectable conditions and target actions within the interface screens to obtain the user input.

Aptly, the method, wherein creating further includes generating a control data structure that defines the custom automated workflow.

Aptly, the method, wherein generating further includes providing at least a portion of the control data structure to an enterprise service.

Aptly, the method, wherein providing further includes providing at least a portion of the control data structure to an enterprise application.

Aptly, the method, wherein processing further includes receiving events from one or more of a user device, an enterprise service, the enterprise application, and third-party applications, wherein the events are associated the user and used to manage the custom workflow.

Aptly, the method, wherein receiving the events further includes evaluating the events against the condition of the custom automated workflow to determined when to process the corresponding target action.

Aptly, the method, wherein managing and processing further includes interacting with an enterprise service during the processing.

Aptly, the method, wherein managing and processing further includes interacting with third-party services used by the user during the processing.

Aptly, the method, wherein the user input and the custom automated workflow includes one or more additional conditions and corresponding target actions.

According to a second aspect of the present invention there is provided a method, comprising:
integrating a workflow into a user interface of an enterprise application associated with an enterprise service;
initiating the workflow during a user session responsive to a user selection of a selectable option to create a custom automated workflow, wherein the selectable option is presented within the user interface;
obtaining, from the workflow, user input for creating the custom automated workflow; and
processing the custom automated workflow to provide functionality that is unavailable from the enterprise service and the enterprise application without the integration of the workflow.

Aptly, the method, wherein integrating further includes integrating the workflow as a container object that presents interface screens to the user and that interacts with a cloud-based service.

Aptly, the method, wherein initiating further includes initiating the container object with a user context provided by the enterprise application for the user session.

Aptly, the method, wherein processing further includes instructing the enterprise service and the enterprise application to report predefined events associated with the custom automated workflow.

Aptly, the method, wherein instructing further includes providing event types for the events to the enterprise service and the enterprise application as one or more of geolocation events, account events, transaction events, date events, and time events associated with the user.

According to a third aspect of the present invention there is provided a system, comprising:
at least one server comprising a processor and a non-transitory computer-readable storage medium;
the non-transitory computer-readable storage medium comprises executable instructions; and
the executable instructions when executed on the processor cause the processor to perform operations comprising:
   interacting with a user interface of an enterprise application associated with an enterprise service to provide a workflow that extends functionality of the enterprise application and enterprise service;
   defining a custom workflow that supports the extended functionality while processing the workflow during a user session between a user and the enterprise service based on input received from the user via interaction with the workflow; and
   providing the extended functionality by processing the custom workflow using events reported by the enterprise application and the enterprise service, wherein the events are used to evaluate at least one user-specified condition defined in the custom workflow.

Aptly, the system, wherein the executable instructions are provided as a cloud service to the enterprise application and the enterprise service.

### Brief Description of the Drawings

FIG. 1 is a diagram of a system for extending features and functions of a mobile application and its user interface, according to an example embodiment.
FIG. 2A depicts example interface screens of an extended user interface for an example extended feature and function of the mobile application, according to an example embodiment.
FIG. 2B depicts additional interface screens for the example extended feature and function of the mobile application presented in FIG. 2A, according to an example embodiment.
FIG. 2C depicts further interface screens for the example extended feature and function of the mobile application presented in FIG. 2B, according to an example embodiment.
FIG. 3A depicts example interface screens of another extended user interface for another example extended feature and function of the mobile application, according to an example embodiment.
FIG. 3B depicts additional interface screens for the example extended feature and function of the mobile application presented in FIG. 3A, according to an example embodiment.
FIG. 3C depicts further interface screens for the example extended feature and function of the mobile application presented in FIG. 3B, according to an example embodiment.
FIG. 3D depicts more interface screens for the example extended feature and function of the mobile application presented in FIG. 3C, according to an example embodiment.
FIG. 4 is a flow diagram of a method for extending features and functions of a mobile application and its user interface, according to an example embodiment.
FIG. 5 is a flow diagram of another method for extending features and functions of a mobile application and its user interface, according to an example embodiment.

### Detailed Description

Enterprises provide a variety of services to their customers/users via mobile applications. Often, these mobile applications have limited automation capabilities, forcing customers to manually perform a variety of tasks, many of which need to be performed repetitively. This is particularly the case for mobile banking customers who utilize mobile banking applications to perform financial transactions or other mobile banking operations such as transferring funds or making bill payments.

The teachings herein provide a technical solution to these technical problems associated with mobile applications and their user interfaces by integrating extended interface screens within the user interfaces of the mobile applications to support extended features and functions, which in turn, are supported by corresponding enterprise servers and/or third-party servers of the enterprises. A framework or platform is provided for the integration. The framework permits a customer or user to set up conditional operation processing flows within the user interfaces of the mobile applications using, for example, a graphical user interface (GUI). The processing flows are assigned one or more trigger actions via the GUI. In an embodiment, the trigger actions are integrated with application programming interfaces (APIs) to third-party services. In this way, a given enterprise's service provided by its mobile application and its user interface can be extended with features and functions of a third-party service that may not be available with the enterprise's service. The enterprise's service, mobile application, and its user interface may be integrated with third-party services to provide enhanced integrated features and functions.

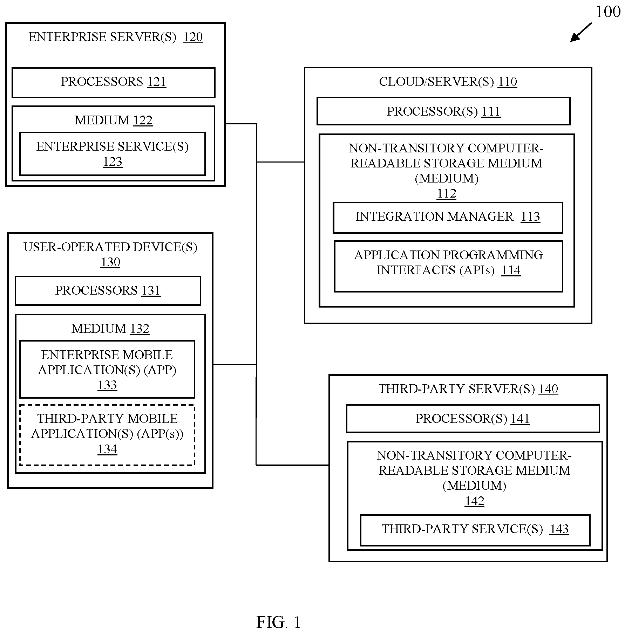

FIG. 1 is a diagram of a system, platform, and/or framework 100 (hereinafter "system 100") for extending features and functions of a mobile application and its user interface, according to an example embodiment. Notably, the components are shown schematically in simplified form, with only those components relevant to understanding of the embodiments being illustrated.

Furthermore, the various components (that are identified in system 100) are illustrated and the arrangement of the components are presented for purposes of illustration only. Notably, other arrangements with more or less components are possible without departing from the teachings of extending features and functions of a mobile application and its user interface as presented herein and below.

System 100 includes a cloud/server 110 (hereinafter "cloud 110"), a plurality of enterprise servers 120, a plurality of user-operated devices 130, and a plurality of third-party servers 140. Cloud 110 includes at least one processor 111 and a non-transitory computer-readable storage medium (hereinafter just "medium") 112, which includes instructions for an integration manager 113 and APIs 114. The instructions when provided to and executed by processor 111 cause processor 111 to perform processing, functions, and/or operations discussed herein and below with respect to 113-114.

As used herein the phrases "workflow automation," "process flow," "conditional process flow", "automated workflow," "custom workflow," customer process flow", "custom workflow automation," and/or custom automated workflow" can be used interchangeably and synonymously herein and below. This refers to conditions and processing actions or target actions arranged in a sequence of logic, which is executed by processors of devices described herein and below.

Each enterprise server 120 includes at least one processor 121 and a medium 122, which includes instructions for enterprise services 123. The instructions when provided to and executed by processor 121 cause processor 121 to perform the processing, functions, and/or operations discussed herein and below with respect to 123.

Each user-operated device (hereinafter "device") 130 includes at least one processor 131 and a medium 132, which includes instructions for an enterprise mobile application (hereinafter "app") 133 and, optionally, one or more third-party apps 134. The instructions when provided to and executed by processor 131 from medium 132 cause processor 131 to perform the processing, functions, and/or operations discussed herein and below with respect to 133-134. Each enterprise mobile app 133 further includes a user interface for user/enterprise customer interaction with a given enterprise service 123.

Each third-party server 140 includes at least one processor 141 and medium 142, which includes instructions for one or more cloud services 143. The instructions when provided to and executed by processor 141 from medium 142 cause processor 141 to perform the processing, functions, and/or operations discussed herein and below with respect to 143.

The user interface of enterprise mobile app 133 is enhanced to present an interface option to automate a workflow and create a conditional operation processing workflow associated with a user's account with an enterprise service 123. A subset of new user interface screens is presented within the user interface for the user to define the new automated workflow. The new user interface screens can either be included within the source code associated with the user interface or rendered dynamically by integration manager 113.

In an embodiment, integration manager 113 receives an API call from enterprise mobile app 133 when a user selects the interface option to create a new automated workflow within the user interface of enterprise mobile app 133. Enterprise mobile app 133 provides context for the API call for the user including a user account identifier, a session identifier for the user's session with enterprise service 123, and, optionally, a user profile. Integration manager 113 uses the context to render the subset of new interface screens to the user within the user session. The conditions defined by the user during the session through interaction with the new interface screens are provided back to enterprise service 123 through API 114. The target actions of the conditions for the session are also sent to enterprise service 123 and/or retained to be sent to one or more third-party services 143 when the conditions are satisfied and reported back to integration manager 113 from enterprise service 123. Target actions are processing actions associated with the conditions and defined in workflows. The target actions are automatically processed when the corresponding condition of a target action is satisfied.

In an embodiment, a container object is added to the enterprise mobile app 133, which includes the workflows and the corresponding logic to enable user interaction with the integration manager 113 and the new interface screens to create a new workflow automation. The enterprise mobile app 133 calls the container object when the user selects the option to create a new workflow automation within the user interface. The container object presents the new interface screens via which the conditions and corresponding target actions for the new workflow automation can be received as input from the user and provides the conditions and target actions and the context for the user session to integration manager 113.

Thus, integration of the new workflow automation option is achieved by enhancing enterprise mobile app 133 and its user interface to include the option to create a new workflow automation. When the new workflow automation is selected by a user, enterprise mobile app 133 passes session control to integration manager 113 or calls or initiates a container that interacts with integration manager 113. Alternatively, source code associated with enterprise mobile app 133 may be enhanced to provide the new interface screens and interact with integration manager 113.

During session interaction with the user and via the subset of new interface screens, the user can select, move, or otherwise manipulate user interface objects associated with the conditions to define a new workflow automation. Similarly, the user can select, move, or otherwise manipulate objects associated with target actions for the one or more of the conditions. Integration manager 113 can store data indicative of the conditions and corresponding target actions in a control data structure as a new conditional processing flow. Based on whether the conditions are evaluated true or false, the corresponding target actions associated with the conditions within the control data structure may be automatically triggered. In some embodiments, if a condition is true, then a corresponding target action is automatically triggered, and if the condition is false, then either the target action may not be performed, or an alternative target action may be triggered. When a target action is triggered, the target action may be processed by either enterprise service 123 or by a third-party service 143.

Integration manager 113 may provide conditions which can be determined or identified by enterprise service 123 via API 114 through evaluation of the conditions by the enterprise service 123. Integration manager 113 can also provide target actions to enterprise service 123 via API 114 for execution of the target actions by the enterprise service 123, for example. In an embodiment, integration manager 113 manages any conditions and corresponding target actions associated with a third-party service 143 and when such target actions are triggered for processing by a third-party service 143 (e.g., based on an evaluation of the corresponding conditions within the control data structure), integration manager 113 may initiate a call to the third-party service 143 via API 114 with the appropriate information . In an embodiment, when a target action is to be processed by a third-party service, integration manager 113 instructs enterprise service 123 and/or enterprise mobile app 134 to report when a given condition is satisfied or not satisfied for purposes of integration manager 113 initiating a corresponding target action with a given third-party service 143 using API 114.

In an embodiment, the conditions are geolocation-based conditions, user enterprise account-based conditions, transaction-based conditions, date-based conditions, and/or time-based conditions. In an embodiment the corresponding target actions include account fund transfer operations, notification operations, bill payment operations, investment operations, transaction operations, and/or pickup and delivery for transaction operations. In an embodiment, integration manager 113 is provided as a cloud service to the enterprise app 133 and the enterprise service 123.

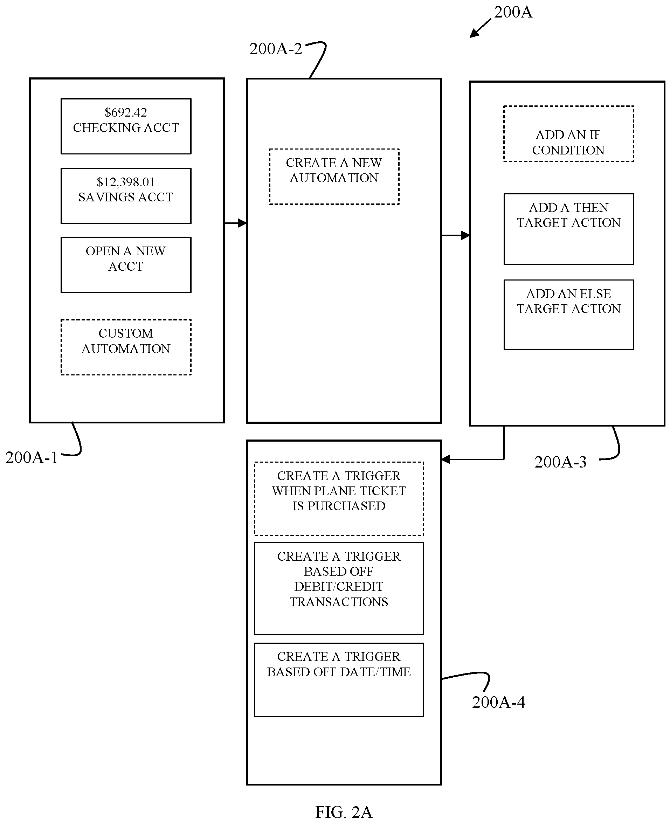

Example user workflow automations, interface screens, and processing performed by system 100 are now presented. FIG. 2A depicts example interface screens 200A of an extended user interface for an example extended feature and function of the mobile application, according to an example embodiment.

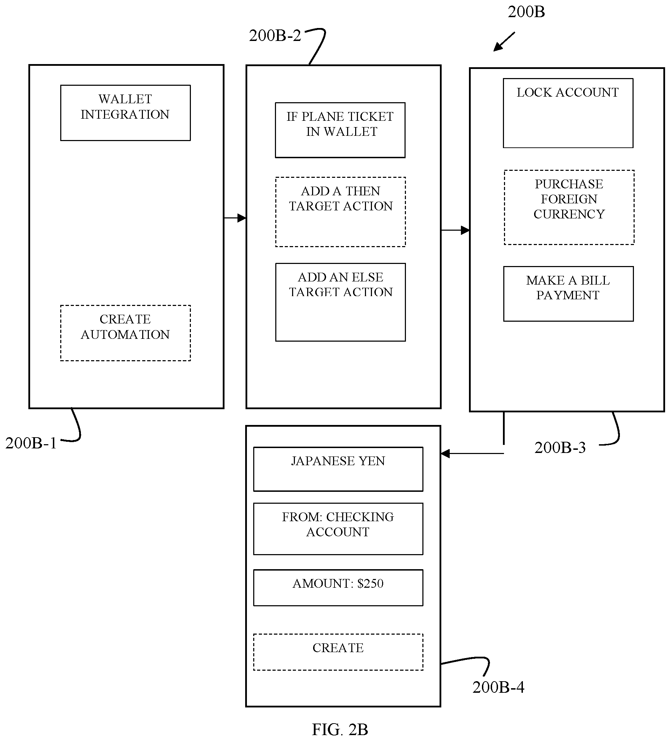

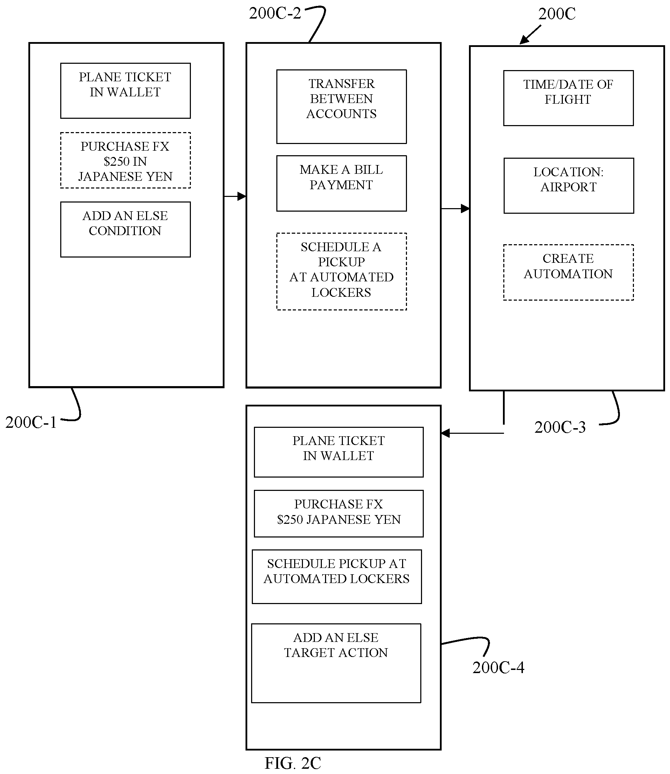

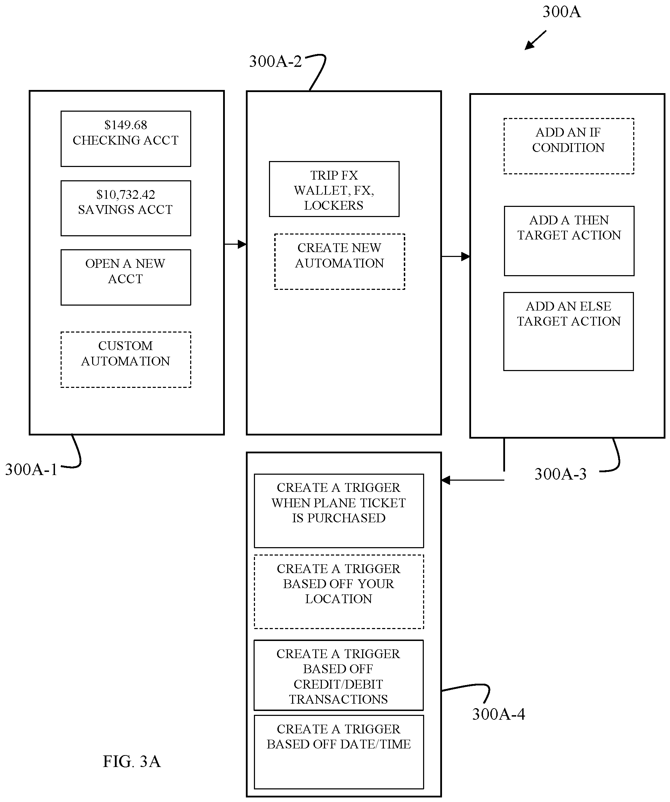

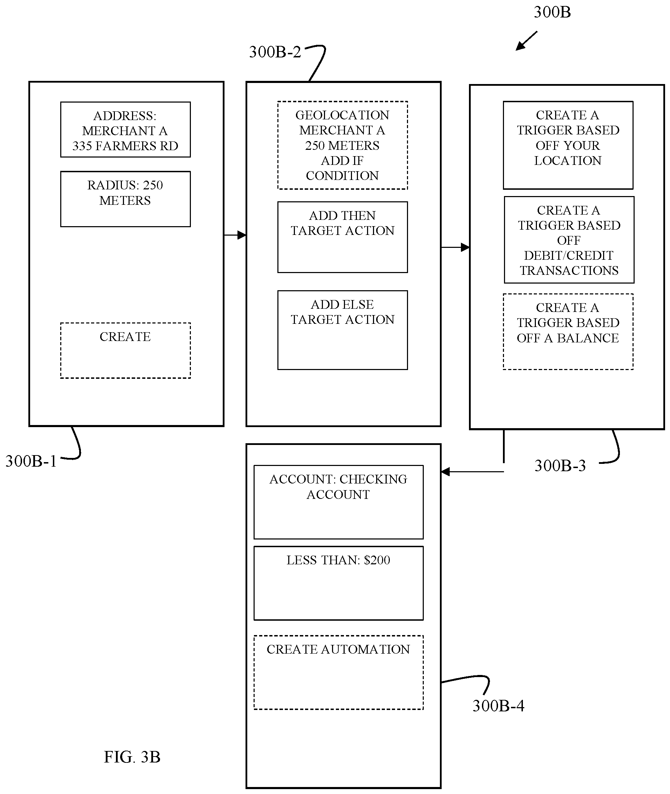

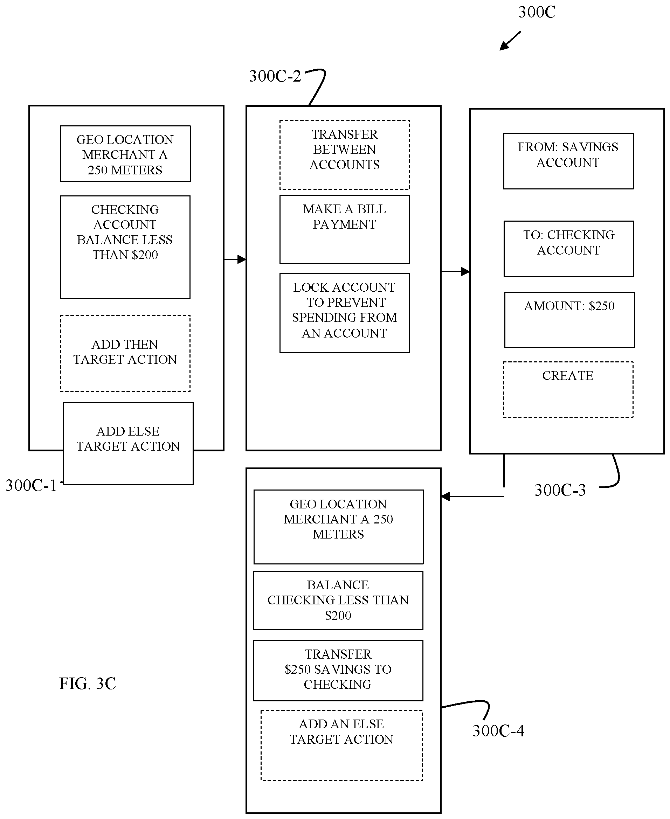

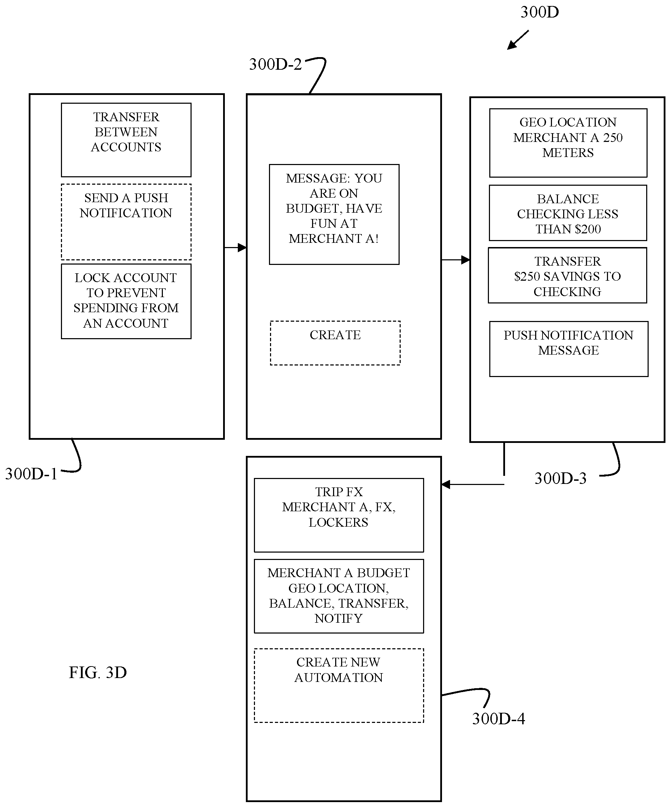

In FIGS. 2A, 2B, and2C and FIGS. 3A, 3B, 3C, and 3D, the user interface options selected by a user are identified by dotted line boxes. That is, in the examples that follow any dotted line box is a selected interface option made by a given user.

In the example shown in FIG. 2A, four sets of interface screens 200A-1 , 200A-2, 200A-3, and 200A-4 are shown during a user session with a user interface of an enterprise mobile app 133. Screen 200A-1 shows an overview of account balances after the user logs into a corresponding enterprise service 123 through enterprise mobile app 133. A new interface option is presented on the initial screen 200A-1 entitled "custom automation," which the user selects during the session. This causes a second screen 200A-2 to be presented to the user with a single option to "create a new automation." When the "create a new automation" interface option is selected, the user is presented with screen 200A-3, which allows the user to add "if," "then", and/or "else" conditions to the new workflow automation being defined interactively by the user during the session. Alternatively, selection of the "custom automation" option on interface screen 200A-1 may result in interface screen 200A-3 being presented. That is, in some embodiments, selection of the "custom automation" option from screen 200A-1 may automatically trigger a new workflow automation with selectable if, then, and/or else conditions presented to the user via screen 200A-3.

In the example, the user selects the option to add an "if" condition to begin defining the user's custom workflow automation. As a result, a plurality of candidate conditions for triggering corresponding target actions are rendered in screen 200A-4 from which the user can select to . In this example, the user selects an "if" condition that triggers a target action when a plane ticket is purchased by the user. Other example conditions include conditions that relate to debit and/or credit transactions and/or date or time-based conditions.

FIG. 2B depicts additional interface screens 200B for the example extended feature and function of the mobile application presented in FIG. 2A, according to an example embodiment. Continuing with the same example, once a user selects an "if" condition corresponding to whether a plane ticket has been purchased, screen 200B-1 is rendered to the user indicating that the condition is deemed satisfied when the plane ticket is detected in the user's digital wallet for wallet integration. Enterprise mobile app 133 or integration manager 113 uses an API 114 to discover the plane ticket purchase and its details. The user then selects a "create automation" option from screen 200B-1 , causing screen 200B-2 to be rendered on device 130 during the session. The user selects the option to add a "then" condition to define target action that will be automatically triggered when the purchased plane ticket is detected in the user's digital wallet. This transitions the user to screen 200B-3 where the user selects automatic purchase of foreign currency as the target action to be performed responsive to the selected "if" condition being satisfied (in this example, a purchased plane ticket being detected in the user's wallet). The application interface then transitions to screen 200B-4 where various parameters associated with the selected target action are presented including the specific foreign currency relevant to a destination of the plane ticket (e.g., "Japanese Yen"), the funding account (e.g., the user's "checking amount"), and the amount entered by the user for the purchase (e.g., "$250"). The user then selects the create option to proceed with creation of the workflow automation.

FIG. 2C depicts further interface screens 200C for the example extended feature and function of the mobile application presented in FIG. 2B, according to an example embodiment. After creating the initial portion of the user automation, the user is presented with more options in screens 200C with respect to the workflow automation.

In screen 200C-1 , the user is presented with the current state of the workflow automation indicating that when the "if" condition is satisfied (e.g., the plane ticket is in the user's digital wallet), then the target action is performed (e.g., $250 in Yen is purchased). The user is also permitted to add an "else" target action to the workflow automation. The user makes a selection confirming that $500 in Yen is to be purchased, causing screen 200C-2 to be rendered to the user. Screen 200-C2 allows the user to define transfer between account actions, bill payment options, or to schedule a pickup of the purchased Yen at an automated locker location. In this example, the user selects the "schedule a pickup at automated lockers" option, causing screen 200C-3 to be rendered to the user.

Screen 200C-3 presents various flight details corresponding to the purchase ticket including, for example, the date and time of the flight. Screen 200C-3 also presents a "create automation" option. The user selects the create automation option, causing screen 200C-4 to be rendered to the user which shows the created custom workflow based on the user's selections and input during the session. The customed automated workflow is defined as follows: when a plane ticket is detected in the user's wallet (the "if" condition is determined to be satisfied), the equivalent of $250 in Yen is to be purchased (target action performed) using the checking account of the user and delivered to an automated locker at the airport where the user can pick up the Yen on the user's date of travel (target action parameters). The user is also permitted to continue defining/modifying the custom workflow by adding an "else" target action if so desired.

FIG. 3A depicts example interface screens 300A of another extended user interface for another example extended feature and function of the mobile application, according to an example embodiment. Whereas the custom workflow example presented in FIGS. 2A-2C focused on an example "if" condition associated with a purchase of a plane ticket detected in the user's digital wallet, the example presented in FIGS. 3A-3D relies on a geolocation of the user's device 130.

Once the user establishes a session with the enterprise service 123 through the user interface of enterprise mobile app 133, an initial screen 300A-1 is rendered to the user showing the user's checking account balance and savings account balance. Additionally, a "custom automation" option is presented. When the user selects the "custom automation" option, screen 300A-2 is rendered to the user showing the user's existing workflow automation corresponding to the example presented in FIGS. 2A-2C (i.e., "Trip FX, Wallet, FX, Lockers"). Additionally, screen 300A-2 allows the user to create a new workflow automation upon selection of the "create new automation" option from screen 300A-2.

In response to the selection of the create new automation option from screen 300A-2, screen 300A-3 is presented to the user via which the user can specify "If-then-else" process flows for defining a new workflow automation. The user selections the add an "if" condition option from screen 300A-3. This causes screen 300A-4 to be rendered.

Screen 300A-4 illustrates a variety of candidate "if" triggering conditions that the user can select from, such as a plane ticket purchase trigger, a geolocation trigger, a debit and/or credit transaction trigger, and a date and/or time trigger. In this example, the user selects the geolocation trigger as the "if" condition.

FIG. 3B depicts additional interface screens 300B for the example extended feature and function of the mobile application presented in FIG. 3A, according to an example embodiment. Once the user selects the geolocation-based "if" condition, screen 300B-1 is rendered, via which the user enters an address associated with the geolocation and specifies a tracking radius around the specified geolocation. Responsive to user selection of the create option on screen 300B-1 , screen 300B-2 is presented. Screen 300B-2 includes the geolocation condition parameters specified by the user including the address and the tracking radius and provides an option to specify a "then" target action to be performed when the geolocation condition is satisfied and/or an "else" target action to be performed when the geolocation condition is not satisfied. In this example, the user selects the geolocation details, causing screen 300B-3 to be rendered. Screen 300-B3 permits the user to select triggering parameters that define when the geolocation condition is satisfied, such as geolocation a trigger based on the user's current location, debit and/or credit triggers, and/or account balance triggers. In this example, the user selects the balance trigger from screen 300B-3. This causes screen 300B-4 to be presented to the user, from which the user selects or enters checking account information and a parameter indicating that the geolocation condition is satisfied when the specified checking account is detected as being under $100. The user then selects a create automation option after providing the account and balance triggering parameters.

FIG. 3C depicts further interface screens 300C for the example extended feature and function of the mobile application presented in FIG. 3B, according to an example embodiment. Screen 300C-1 presents the current automation details for the user's new workflow automation as discussed above with respect to FIGS. 3A and 3B along with an option to add a "then" target action and/or an "else" target action. In this example, the user selects the add a "then" target action option from screen 300C-1 .

Screen 300C-2 is then presented to the user with options to transfer between accounts, make bill payments, or lock an account down to prevent spending. In this example, the user selects the transfer between accounts options, causing screen 300C-3 to be presented to the user. The user enters the user's savings account details for the source of the funds transfer and enters the users' checking account details for the "to" account. The user also enters the dollar amount into the amount field and the user then selects the "create" option from screen 300C-3.

Screen 300C-4 is then presented to the user illustrating the newly created custom automated workflow including details of the workflow such as the triggering parameters of the conditions and the corresponding target action to be performed upon satisfaction of the conditions. In this example, a first condition of the custom workflow (the geolocation condition) is satisfied when the user's device 130 is detected within the user-defined radius of the user-specified address for the geolocation. Further, a second condition of the custom workflow is satisfied when the user's checking balance falls below the user-specified threshold amount. When the first and second conditions are satisfied, the custom workflow specifies that a target action (i.e., a transfer of the user-defined amount from the user's savings account to the user's checking account) is to be automatically initiated/performed. Continuing with the same example, screen 300C-4 also provides the user with the option of specifying an "else" condition to add to the custom workflow being defined by the user during the session.

FIG. 3D depicts more interface screens 300D for the example extended feature and function of the mobile application presented in FIG. 3C, according to an example embodiment. After the user elects to add an "else" target action, screen 300D-1 is presented to the user during the session. Screen 300D-1 provides the user with new selectable actions including transferring funds between accounts, sending a push notification, and locking an account to prevent spending from the account. In this example, the user selects a "push notification" option from screen 300D-1 causing screen 300D-2 to be presented to the user.

The user enters a desired message that the user wants to receive as a real-time push notification on user device 130 and selects the "create" workflow automation option on screen 300D-2. Screen 300D-3 is then presented to the user which specifies the current selections and entered information for the custom workflow. Finally, screen 300D-4 presents the two custom workflow automations that the user created - one associated with purchasing a plane ticket as discussed in FIGS. 2A-2C and one for a geofenced store budget as discussed in FIGS. 3A-3D.

Notably, once a user selects an option to create a custom workflow, the options and user interface screens that follow are customizable for a given enterprise service 123 and its enterprise app 133. Other example automations include, by way of example only, 1) transferring funds to a child based on parameters set by a parent/guardian; 2) when a user spends more than a budgeted amount on a specific category of goods/services, email the user that the budget was exceeded and lock a payment card associated with the user; 3) when an account has a balance and a bill is due, automatically pay the bill in full unless the funds are insufficient in which case transfer between accounts so sufficient funds are available else send a push notification warning to the user; 4) if the user is a freelancer, subtract the appropriate tax rate from the contractor's payment and transfer to the user's savings account to ensure the user has funds to pay their taxes when they come due; 5) at a set time of a month, withdraw funds from a designated user account and interact with the third-party service 143 to purchase a stock or other investment instrument.

System 100 permits existing user interfaces for existing mobile apps associated with existing enterprise services to be extended and enhanced to create customer user-defined workflows, as taught herein. Conditions can be set by the user through interaction with interface screens that are initiated from or included within the user interface of the enterprise mobile apps 133. Conditions and associated triggering parameters (parameters/values that define when a condition is satisfied such as a minimum threshold account balance where the condition is met if the account balance falls below the minimum threshold balance) can be specified by the user along with corresponding user-defined actions to be automatically processed in response to the condition(s) being met. The custom workflows can be integrated into the enterprise services 123 and enterprise mobile apps 133 along with third party services 143 even when the third party services 143 are not integrated and accessible from the enterprise services 123 and enterprise mobile apps 133.

In an embodiment, the enterprise service 123 is a financial institution (FI) and the enterprise mobile app 133 is a mobile banking application. In an embodiment, the enterprise service 123 is any retail-based service and the enterprise mobile app 133 is any mobile retail application. In an embodiment, the enterprise mobile app 133 is a web-based browser application. In an embodiment, the enterprise mobile app 133 is a specific application for a mobile device.

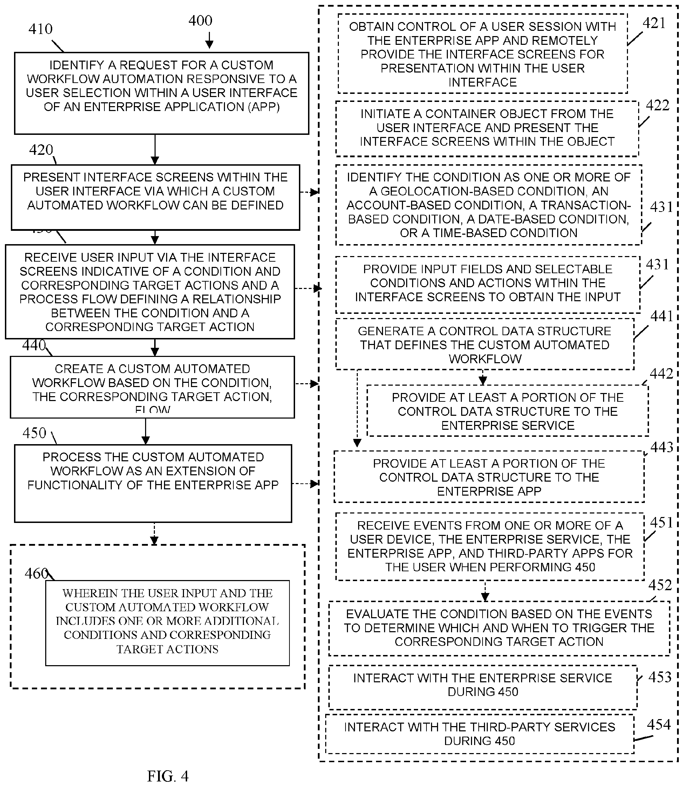

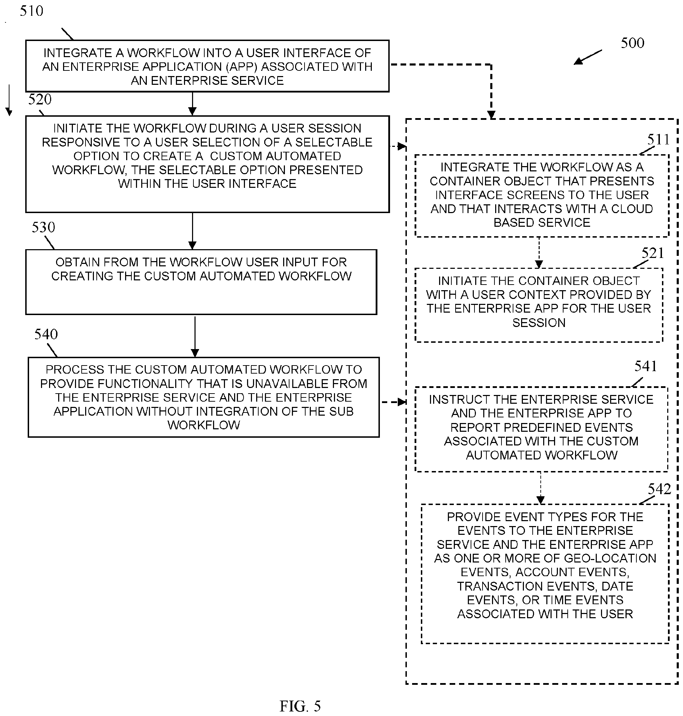

The above-referenced embodiments and other embodiments are now discussed with reference to FIGS. 4 and 5. FIG. 4 is a diagram of a method 400 for extending features and functions of a mobile application and its user interface, according to an example embodiment. The software module(s) that implements the method 400 is referred to as a "custom workflow integration manager." The custom workflow integration manager is implemented as executable instructions programmed and residing within memory and/or a non-transitory computer-readable (processor-readable) storage medium and executed by one or more processors of one or more devices. The processor(s) of the device(s) that executes the custom workflow integration manager are specifically configured and programmed to process the workflow integration manager. The workflow integration manager may have access to one or more network connections during its processing. The network connections can be wired, wireless, or a combination of wired and wireless.

In an embodiment, the device that executes the workflow integration manager is cloud 110. In an embodiment, the device that executes the workflow integration manager is server 120. In an embodiment, at least a portion of the workflow integration manager is executed by a combination of devices 110, 120, 130, and/or 140. In an embodiment, the workflow integration manager is integration manager 113, API 114, enterprise service 123, enterprise mobile app 133, third-party apps 134, and/or third-party service 143.

At 410, the workflow integration manager identifies a request for a custom workflow automation responsive to a user selection within a user interface of an enterprise app 133. That is, the initial interface screen of the user interface for the enterprise app 133 may be enhanced to include the option to initiate the request for the custom workflow automation.

At 420, the workflow integration manager presents interface screens within the user interface via which a custom automated workflow is defined based on the user selection at 410. Example interface screens were discussed above with respect to FIGS. 2A-2C and 3A-3D.

In an embodiment, at 421, the workflow integration manager obtains control of a user session with the enterprise app 133 and remotely provides the interface screens for presentation and rendering within a user interface of the enterprise app 133. In an embodiment, at 422, the workflow integration manager initiates a container object from the user interface and presents the interface screens within the container object.

At 430, the workflow integration manager receives user input via the interface screens indicative of at least one condition and at least one corresponding target action and a process flow defining a relationship between the condition and target action. In an embodiment, at 431, the workflow integration manager provides input fields and selectable conditions and actions within the interface screens to obtain the input from the user. The user can enter data or select one or more predefined conditions and/or one or more predefined target actions through the interface screens.

At 440, the workflow integration manager creates a custom automated workflow from the condition, corresponding target action, and defined process flow. In an embodiment, at 441, the workflow integration manager generates a control data structure that defines the custom automated workflow. In an embodiment of 441 and at 442, the workflow integration manager provides at least a portion of the control data structure to the enterprise service 123. In an embodiment of 441 and at 443, the workflow integration manager provides at least a portion of the control data structure to the enterprise app 133.

At 450, the workflow integration manager processes the custom automated workflow as an extension of functionality of the enterprise app 123. In an embodiment the custom automated workflow extends functionality of and/or the enterprise service 123 that the enterprise service 123 associated with the enterprise app 133.

In an embodiment, at 451, the workflow integration manager receives events from one or more of a user device 130, the enterprise service 123, the enterprise app 133, and third-party apps 134. The events are associated with the user and used when performing 450. In an embodiment of 451 and at 452, the workflow integration manager evaluates the condition of the custom automated workflow against the events to determine if the condition is satisfied, and thus, if and when to process the corresponding target action(s).

In an embodiment, at 453, the workflow integration manager interacts with the enterprise service during performance of 450. In an embodiment, the workflow integration manager interacts with third-party services 143 during performance of 450. In an embodiment, the workflow integration manager (e.g., 410-450) is provided as a cloud service that interacts with the enterprise app 133, the user interface, and/or the enterprise service 123. In an embodiment, at 460, the user input and the custom automated workflow includes one or more additional conditions and corresponding target actions.

FIG. 5 is a diagram of another method 500 for extending features and functions of a mobile application and its user interface, according to an example embodiment. The software module(s) that implements the method 500 is referred to as an "enterprise service feature extender." The enterprise service feature extender is implemented as executable instructions programmed and residing within memory and/or a non-transitory computer-readable (processor-readable) storage medium and executed by one or more processors of one or more device(s). The processors that execute the enterprise service feature extender are specifically configured and programmed for processing the enterprise service feature extender. The enterprise service feature extender may have access to one or more network connections during its processing. The network connections can be wired, wireless, or a combination of wired and wireless.

In an embodiment, the device that executes the enterprise service feature extender is cloud 110. In an embodiment, the device that executes the enterprise service feature extender is a server 120. In an embodiment, at least a portion of the enterprise service feature extender is executed by a combination of devices 110, 120, 130, and/or 140. In an embodiment, the enterprise service feature extender is integration manager 113, API 114, enterprise service 123, enterprise mobile app 133, third-party apps 134, and/or third-party service 143. The enterprise service feature extender presents another and, in some ways, enhanced processing perspective from that which were discussed above for system 100 and method 400.

At 510, the enterprise service feature extender integrates a workflow into a user interface of an enterprise app 133 associated with an enterprise service 123. In an embodiment, at 511, the enterprise service feature extender integrates the workflow as a container object that presents interface screens to the user and that interacts with a cloud-based service, such as integration manager 113.

At 520, the enterprise service feature extender initiates the workflow during a user session responsive to a user selection of a selectable option to create a custom automated workflow. The selectable option is presented within the user interface. In an embodiment of 511 and 520, at 521, the enterprise service feature extender initiates the container object with a user context provided by the enterprise app 133 for the user session. In an embodiment, the user context includes user account information for the user with the enterprise service 123.

At 530, the enterprise service feature extender obtains from the workflow user input for creating the custom automated workflow. At 540, the enterprise service feature extender manages and processes the custom workflow to provide features and functions that were unavailable from the enterprise service 123 and the enterprise app 133 without integration of the sub workflow.

In an embodiment, at 541, the enterprise service feature extender instructs the enterprise service 123 and the enterprise app 133 to report predefined events associated with the custom automated workflow. In an embodiment of 541 and at 542, the enterprise service feature extender provides event types for the events to the enterprise service 123 and the enterprise app 133 as one or more of geolocation events, account events, transaction events, date events, and/or time events associated with the user.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method, comprising:
identifying a request to create a custom workflow automation responsive to a user selection within a user interface of an enterprise application;
presenting one or more interface screens within the user interface;
receiving, via the one or more user interface screens, user input indicative of a condition and a corresponding target action to be performed responsive to satisfaction of the condition;
creating a custom automated workflow based on the condition and the corresponding target action; and
processing the custom automated workflow as an extension of functionality of the enterprise application.

2. The method of claim 1, wherein presenting further includes obtaining control of a user session with the enterprise application and remotely providing the one or more interface screens for presentation within the user interface.

3. The method of claim 1 or claim 2, wherein presenting further includes initiating a container object from the user interface and presenting the interface screens within the container object.

4. The method of any preceding claim, wherein receiving further includes identifying the condition as one or more of a geolocation-based condition, an account-based condition, a transaction-based condition, a date-based condition, and a time-based condition; and/or
receiving further includes providing input fields and selectable conditions and target actions within the interface screens to obtain the user input.

5. The method of any preceding claim, wherein creating further includes generating a control data structure that defines the custom automated workflow; and optionally
generating further includes providing at least a portion of the control data structure to an enterprise service.

6. The method of claim 5, wherein providing further includes providing at least a portion of the control data structure to an enterprise application.

7. The method of any preceding claim, wherein processing further includes receiving events from one or more of a user device, an enterprise service, the enterprise application, and third-party applications, wherein the events are associated the user and used to manage the custom workflow; and optionally
receiving the events further includes evaluating the events against the condition of the custom automated workflow to determine when to process the corresponding target action.

8. The method of any preceding claim, wherein managing and processing further includes interacting with an enterprise service during the processing; and optionally
managing and processing further includes interacting with third-party services used by the user during the processing.

9. The method of any preceding claim, wherein the user input and the custom automated workflow includes one or more additional conditions and corresponding target actions.

10. A method, comprising:
integrating a workflow into a user interface of an enterprise application associated with an enterprise service;
initiating the workflow during a user session responsive to a user selection of a selectable option to create a custom automated workflow, wherein the selectable option is presented within the user interface;
obtaining, from the workflow, user input for creating the custom automated workflow; and
processing the custom automated workflow to provide functionality that is unavailable from the enterprise service and the enterprise application without the integration of the workflow.

11. The method of claim 10, wherein integrating further includes integrating the workflow as a container object that presents interface screens to the user and that interacts with a cloud-based service.

12. The method of claim 11, wherein initiating further includes initiating the container object with a user context provided by the enterprise application for the user session.

13. The method of any one of claims 10 to 12, wherein processing further includes instructing the enterprise service and the enterprise application to report predefined events associated with the custom automated workflow; and optionally
instructing further includes providing event types for the events to the enterprise service and the enterprise application as one or more of geolocation events, account events, transaction events, date events, and time events associated with the user.

14. A system, comprising:
at least one server comprising a processor and a non-transitory computer-readable storage medium;
the non-transitory computer-readable storage medium comprises executable instructions; and
the executable instructions when executed on the processor cause the processor to perform operations comprising:
interacting with a user interface of an enterprise application associated with an enterprise service to provide a workflow that extends functionality of the enterprise application and enterprise service;
defining a custom workflow that supports the extended functionality while processing the workflow during a user session between a user and the enterprise service based on input received from the user via interaction with the workflow; and
providing the extended functionality by processing the custom workflow using events reported by the enterprise application and the enterprise service, wherein the events are used to evaluate at least one user-specified condition defined in the custom workflow.

15. The system of claim 14, wherein the executable instructions are provided as a cloud service to the enterprise application and the enterprise service.
